Europäisches Patentamt

European Patent Office

Office européen des brevets

(11) Publication number: **0 144 785**
**B1**

(12) EUROPEAN PATENT SPECIFICATION

(45) Date of publication of patent specification: **06.07.88**  (51) Int. Cl.⁴: $A\ 23\ F\ 5/46$

(21) Application number: **84113458.8**

(22) Date of filing: **08.11.84**

(54) Coffee aromatization.

(30) Priority: **06.12.83 US 558485**

(43) Date of publication of application:
**19.06.85 Bulletin 85/25**

(45) Publication of the grant of the patent:
**06.07.88 Bulletin 88/27**

(84) Designated Contracting States:
**AT BE CH DE FR GB IT LI LU NL SE**

(56) References cited:
**BE-A- 496 542**
**FR-A-1 442 580**
**GB-A- 687 175**
**US-A-3 823 241**

(73) Proprietor: **SOCIETE DES PRODUITS NESTLE S.A.**
**Case postale 353**
**CH-1800 Vevey (CH)**

(72) Inventor: **Ghodsizadeh, Yousef**
**159, Highland Avenue**
**Worthington, Ohio 43085 (US)**

Courier Press, Leamington Spa, England.

EP 0 144 785 B1

# 0 144 785

## Description

This invention is concerned with a process for transferring aroma from roast and ground coffee to instant coffee.

The desirability of preparing an instant coffee product containing much of the aromatic components originally contained within fresh roasted coffee beans, to provide an instant coffee having aroma and flavor comparable to fresh roasted coffee, has long been recognized.

Various expedients have been suggested to prevent the loss of volatile aromatics during processing of roast coffee beans or, alternatively, to transfer the volatile aromatics directly from the roasted beans to the instant coffee product. For example, a technique for recovering volatiles evolved during grinding of roast coffee is disclosed in U.S. Patent No. 2,306,061, where the volatile aromatics are brought into contact with liquid coffee extract, or preferably, dried extract which is maintained at a temperature well below 0°C, such as from −15°C to −70°C. An inert gas is preferably employed to act as a carrier for the evolved grinder gases. This technique, too, suffers from a number of disadvantages, the foremost being the requirement for the liquid extract (or dried coffee) to be at extremely low temperatures. Furthermore, applicants have found that use of an inert gas as a carrier in the transfer of volatile aromatics may be detrimental because a relatively small amount of aromatics has to be removed from the much larger volume of inert gas. Moreover, the aromatic fractions which are transferred to the instant coffee are generally not the aromatic fractions which are most desirable in obtaining a well balanced and pleasing in-jar aroma. On the contrary, the desirable fractions tend to remain in the inert gas while those having unbalanced and harsh notes are retained by the coffee powder.

Another technique, described in U.S. Patent No. 1,836,931 discloses mixing freshly ground and roast coffee with soluble coffee for a sufficient length of time for the soluble coffee to absorb the desired amount of aroma from the roast and ground coffee. The obvious disadvantage of this process is the difficulty in achieving complete separation of the soluble coffee from the roast and ground coffee.

According to the present invention, volatile aromatics from roast and ground coffee beans are transferred to instant coffee powder which is at a temperature of 0° to 35°C, the volatile aromatics being evolved from roast and ground coffee by heating to a temperature of 30°C to 95°C. During the transfer the roast and ground coffee is out of contact with the instant coffee. Desirably, the roast and ground coffee is subjected to agitation while it is being heated so as to increase the rate of release of the volatile aromatics therefrom, and the released volatile aromatics are then allowed to come into contact with and be selectively adsorbed by the instant coffee powder.

It has thus surprisingly been found that very low powder temperatures which create a steep temperature gradient between the roast and ground coffee and the instant coffee as well as a carrier gas for the volatiles, are not at all necessary to produce an aromatized instant coffee with high quality aroma.

Whilst not wishing to be bound by theory, it is believed that in the specific temperature range at which the instant coffee of the present invention is maintained it selectively adsorbs and retains those aromatic fractions which primarily provide an organoleptic profile most similar to roast and ground coffee itself so as to provide a pleasing, more balanced and less harsh in-jar aroma.

The initial step of the process (when necessary) is to bring the temperature of the instant coffee powder to within the range of from 0° to 35°C, and more preferably, within the temperature range of from 10° to 20°C. The heating or cooling of the coffee powder can be carried out by any conventional means, for example in a jacketed vessel having either steam or cooling water flowing in the jacket.

The instant coffee powder may be spray dried, drum dried, freeze dried, extruded, etc., and may have been prepared from any combination of coffee varieties. Decaffeinated instant coffee powder may also be aromatized by this process.

The moisture content of the instant coffee powder will generally be in the range of 2 to 5% and preferably 3 to 4%. Within this range, however, the specific moisture content has little effect upon the aromatization of the instant coffee powder.

The specific surface area of conventionally produced instant coffee powders is generally in the range of 0.1 to 0.3 $m^2$/gm. If desirable, although not required in the present invention, instant coffee particles having a microporous structure may be used to promote adsorption of the volatile aromatics.

To improve retention of aroma on storage, it is desirable to add an oily substance, as by plating, to the instant coffee powder prior to contacting with the volatile aromatics. Generally, the amount of oily substance added is 0.1 to 1.0% by weight of the instant coffee powder. Preferred are oily substances which naturally occur in coffee, such as coffee oil or coffee oil fractions, but other oily substances from non-coffee sources may also be employed provided that they are neutral in aroma and taste, do not affect solubility and have a storage life which is at least equal to that of the coffee product. Examples of suitable substances include corn oil, coconut oil, soybean oil, sunflower oil, and the like.

As noted above, the roast and ground coffee is heated to a temperature within the range of 30° to 95°C, and preferably to 50° to 80°C. Apart from the temperature, the aromatization process may be influenced by the particle size of the roast and ground coffee, and it has been found that the finer the grind, the more rapidly the volatile aromatics are liberated. It is consequently desirable that the roast and ground coffee have a mean particle size of 0.1 to 2.5 mm, and more preferably, 1.0 to 1.5 mm. Generally, from an economical and efficiency standpoint, the particle size of the roast and ground coffee is usually dictated by the conditions of extraction to which the coffee will be subjected.

It has also been observed that the degree of roast ("G") of the coffee is relevant. The roast degree may be expressed on scale of from 1 to 10, where 10 is the lightest color. A Photovolt reflection meter (Model 610) may be used for color determination employing Munsell paper No. 5YR 3/2 with a matte finish as a reference standard for a degree of roast of 6.32 G. In general, the darker roasts are more desirable for they produce an instant coffee product having a stronger, more intense in-jar aroma. Too dark a roast, however, may produce a strong but somewhat harsher in-jar aroma. Accordingly, roast and ground coffee having a degree of roast as defined hereinabove of between about 2 to 5 G is preferred and a range of from 3 to 4 G is even more preferred.

The particular blend of coffee used, as well as the source of the instant coffee powder itself, will also influence the character of the aromatized instant coffee powder. If the ground roast coffee blend comprises largely Robusta coffees, the character of the aromatized instant powder will be characterized as "earthy" and "fuzzy". On the other hand, if the roast and ground coffee from which the aroma is transferred is a blend which comprises largely high grade Arabica coffees, the aromatized powder will have an aroma character which is characterized as being "sweet", "aromatic", and "fruity".

The amount of roast and ground coffee that is employed to aromatize a given amount of instant coffee powder is somewhat dependent upon the various factors discussed above, such as temperature or degree of roast. Usually, however, it is desirable to have a ratio, by weight, of roast and ground coffee to the instant coffee powder in the range of 0.1:1.0 to 2.0:1.0, and preferably in the range of 0.5:1.0 to 2:1.0.

The amount of volatile aromatics released per kilogram of roast and ground coffee is also dependent upon the factors discussed above including the blend, degree of agitation and particle size. In general, 900 to 1800 standard cubic centimeters per hour of aroma-laden gases (volatile aromatics and carbon dioxide) are released per kilogram of roast and ground coffee treated.

The released volatile aromatics are preferably in contact with the instant coffee powder for a time period of 10 to 90 minutes and preferably 20 to 60 minutes. This contact time is also dependent upon a variety of factors. Thus, the degree of agitation, if any, to which the roast and ground coffee is subjected will generally influence the holding period. In addition, the instant coffee powder may also be agitated to provide more surface area for contact with the released volatile aromatics and to provide for more uniform aromatization. The agitation of the instant coffee powder should not cause physical breakdown of the powder which may raise its density. Agitation of the instant coffee powder will generally shorten the holding time necessary to achieve a particular degree of aromatization. It has been found, however, that a contact time above 120 minutes provides no added·benefit to the aromatization process.

Taking into account all the various factors discussed above, approximately 50 to 80% of the released volatile aromatics are adsorbed by the instant coffee powder. As was breifly discussed earlier, it has been found that it is not desirable for all of the volatile aromatics to be adsorbed by the instant coffee powder, but only those which provide a strong, well-balanced and natrual coffee-like aroma.

Such a selective adsorption is obtained by controlling the temperatures of the roast and ground coffee and of the instant coffee powder. Accordingly, the combination of heating the roast and ground coffee to a temperature within the range of from 30° to 95°C whereby a particular composition of volatile aromatics is released and maintenance of the instant coffee powder in the temperature range of from 0° to 35°C causes the instant coffee to act as a selective "filter", retaining the most desirable fractions of the released volatile aromatics and leaving behind those fraction which tend to impart less desirable and harsh notes.

The efficiency of adsorption may be improved by recycling the aroma-laden gases, so that the instant coffee powder will selectively adsorb essentially the most desirable fractions from the recycled gases. The aroma-laden gases may be ·recycled to the same or subsequent batches of instant coffee powder.

Once the instant coffee powder has been aromatized by the present process, it may be used as is or, if desired, it may be mixed with unaromatized instant powder, depending upon the strength of the aroma initially imparted to the instant coffee powder and the ultimate aromatization strength desired.

The process of the present invention may be carried out in batch, semi-continuous or continuous manner. In the batch mode, the process may be carried out in a closed system by simply employing two jacketed, co-axially rotating drums separated from each other by a gas-permeable membrane having openings sufficiently small to retain the ground coffee, but which permit the passage of the aroma-laden gases. Generally, the membrane may have pore openings of 5 to 62 µm.

The rotating drums revolve about a common longitudinal axis and are joined to each other transversely to the axis of rotation. Each drum has a separate inlet and outlet for the coffee or powder and each is connected to a source of steam or chilled water. The drums rotate simultaneously at the same speed. The roast and ground coffee is placed on one side of the membrane in one drum and the instant coffee powder in the other drum on the other side of the membrane.

In an alternative embodiment of the batch process, two independent sealed drums may be employed which are connected by a conduit through which the released volatile aromatics pass from the roast ground coffee to the instant powder. Preferably, a fan is provided in the conduit to move the aromatics over the length of the conduit. A membrane for preventing ground coffee powder from being transferred to the instant coffee is recommended.

In the semi-continuous mode, the process may be carried out, for example, by taking advantage of the fact that at some time during the handling of the roast and ground coffee it will have to be transferred from one point to another. Thus, if the roast and ground coffee is to be ultimately employed for the production of coffee extract, it will have to be transferred from either a storage facility or directly from the grinder to extraction cells. Applicant has found that by employing a jacketed screw conveyor to transfer the roast and ground coffee, the process of the present invention may be carried out simultaneously with the transferring of the coffee.

The screw thus performs a three-fold function. It transfers the coffee; it provides agitation of the coffee by the tumbling action produced by the screw flights; and it also provides for the heating of the coffee. Means, such as a pipe, are provided for bringing the released volatile aromatics into contact with the instant coffee powder, the pipe being preferably provided with a gas-permeable membrane to trap solids. The aromatics may for example be passed through one or more storage bins containing instant coffee powder at ambient temperature. The bins may be arranged in series or in parallel and, preferably, the volatile aromatics are introduced at the bottom of each bin by means of a conventional gas sparger or distributor in order to provide maximum contact. Aromatics which have not been completely adsorbed during initial contacting may be recycled.

The continuous mode may be operated in a manner very similar to the semi-continuous, with the exception that the instant powder rather than being stationary in storage bins is passed through a gas/solid contacting chamber during a transfer. The volatile aromatics are, as above, obtained in a heated screw conveyor and passed through the chamber. Within the chamber the powder enters at the top and falls by gravity to the bottom, whereas the gas enters at the bottom, travels upwards and leaves through the top. In this countercurrent fashion, better contact is made between the volatile aromatics and the instant coffee powder. As in the semi-continuous mode, those gases which pass through the chamber may be recycled. The contacting chamber may optionally include a gas/solid blender or a vibrating or fluidized bed.

In the semi-continuous and continuous modes a fan is generally employed to aid in the transfer of the volatile aromatics from the screw to the powder. A slight pressure may as a result obtain within the system but it will generally be no greater than that required to overcome the pressure drop in the system and will usually be not greater than about 0.1 kg/cm$^2$. All modes are operated in a closed system to prevent loss of volatile aromatics.

The process of the present invention does not require purging of the aromatization system of air to prevent the oxidation of the coffee constituents. Moreover, it has been observed that the aromatized instant coffee powder may be packaged without inert gas protection against oxidation as is done conventionally. By not employing an inert gas, undesirable stripping of volatile aromatics is avoided, and it has also been found that the volatile aromatics adsorbed when an inert gas carrier is used for transfer do not impart to the instant coffee powder as good an organoleptic profile as when no inert gas is employed.

Storage tests of the aromatized instant coffee produced by the process of the present invention show that the product remains stable for about 1 year without any degradation of the in-jar aroma and has a balanced, desirable coffee-like quality. Additionally, the aroma intensity is very strong at the beginning and diminishes only gradually during storage of about 1 year.

The following Examples are given by way of illustration only.

Example 1

36 kg of freshly ground roasted coffee are loaded into one of two jacketed stainless steel drums, each 0.69 m in diameter and 0.76 m long, in coaxial relationship and transversely connected together. The drums are separated by a gas-permeable membrane. The average pore size of the membrane is about 53 μm. The roast and ground coffee has a degree of roast of 2.8 G, and an average particle size of 1 mm.

18 kg of spray-dried and agglomerated instant coffee powder having a moisture content of 3.5% introduced are filled into the other drum. The coffee powder contains 0.7% by weight of coffee oil which has been sprayed onto the particle surfaces, and it is pre-chilled to a temperature of 7°C.

The drums are rotated simultaneously at about 1 rpm, and steam and chilled water are passed through the roast coffee and instant coffee powder drum jackets, respectively, bringing the temperature of the roast coffee to 87°C and the instant coffee powder to a temperature of 12°C.

The released aroma-laden gases containing the volatile aromatics diffuse through the membrane and are held in contact with the instant coffee powder for 40 minutes.

The aromatized instant powder produced by this embodiment is air-packed and has a strong, balanced and coffee-like in-jar aroma.

Example 2

The procedure described in Example 1 is repeated except that the holding period is increased to 80 minutes. The temperature of the instant powder at the end is 15°C.

Example 3
(Comparison Example)

The procedure of Example 1 is repeated except that the instant powder is maintained at a temperature below −40°C.

The instant powder is initially chilled to about −68°C by keeping it overnight in thin layers in plastic bags which are immersed in dry ice pellets. The jacket of the instant powder drum is cooled by glycol maintained at −52°C. At the end of the 40 minute trial, the instant powder temperature is −45°C.

The resulting aromatized instant coffee powder has a harsh and unbalanced in-jar aroma when compared to the aromatized instant coffee prepared by the process of Example 1.

The aromatic intensity of the products prepared in Examples 1—3 is determined by gas chromatography. A sample of fresh roast and ground coffee is also subjected to gas chromatographic analysis to act as a control. In addition, each of the products is also subjected to sensory tests by a panel of expert tasters to evaluate their aroma with respect to quality, intensity and overall organoleptic preference.

For the chromatographic analysis, A Varian (Model 3700) flame ionization gas chromatograph (G.C.) is used. The headspace of each jar sample is swept by a stream of nitrogen for 5 minutes. This gas stream transfers the volatile aromatics from the instant coffee powder jar to a packed tube placed in the effluent line. The packed tube containing the adsorbed volatiles is placed in the gas chromatograph desorption oven and the contents of the tube are transferred to a liquid nitrogen cooled capillary trap. The liquid nitrogen is then removed from the trap, and the contents are introduced into the head of the G.C. column, which is temperature programmed from 20° to 180°C.

The raw counts for the peaks obtained from the integrator and the percentage of total counts for each of the samples tested are given in Table I.

TABLE I
Gas chromatographic analysis
(Actual peak counts and % of total peak counts)

| Peak No. | Time (min.) | Fresh R & G coffee | | Example 1 | | Example 2 | | Example 3 | |
|---|---|---|---|---|---|---|---|---|---|
| | | Actual ($\times 10^{-6}$) | % of total count | Actual ($\times 10^{-6}$) | % of total count | Actual ($\times 10^{-6}$) | % of total count | Actual ($\times 10^{-6}$) | % of total count |
| 1 | 0.6 | 3.76 | 8.10 | 0.31 | 0.62 | 0.37 | 0.59 | 0.21 | 0.21 |
| 2 | 1.0 | 7.59 | 16.34 | 3.43 | 6.84 | 3.96 | 6.30 | 3.80 | 3.73 |
| 3 | 1.2 | 1.79 | 3.85 | 0.91 | 1.81 | 1.12 | 1.78 | 1.27 | 1.25 |
| 4 | 1.7 | 17.20 | 37.04 | 13.40 | 26.71 | 13.80 | 21.94 | 33.60 | 32.96 |
| 5 | 2.4 | 3.52 | 7.58 | 4.60 | 9.17 | 5.45 | 8.66 | 14.30 | 14.03 |
| 6 | 2.8 | 1.57 | 3.38 | 2.20 | 4.39 | 2.68 | 4.26 | 5.20 | 5.10 |
| 7 | 3.5 | 5.02 | 10.81 | 8.76 | 17.46 | 10.70 | 17.01 | 22.10 | 21.68 |
| 8 | 4.4 | 2.23 | 4.80 | 4.40 | 8.77 | 4.93 | 7.84 | 10.50 | 10.30 |
| 9 | 6.6 | 1.41 | 3.04 | 3.73 | 7.43 | 5.20 | 8.27 | 5.40 | 5.29 |
| 10 | 7.7 | 0.26 | 0.56 | 0.81 | 1.61 | 1.37 | 2.18 | 0.93 | 0.91 |
| 11 | 8.4 | 0.81 | 1.74 | 2.84 | 5.66 | 4.85 | 7.71 | 1.69 | 1.65 |
| 12 | 10.0 | 0.91 | 1.96 | 3.63 | 7.24 | 6.26 | 9.95 | 2.30 | 2.25 |
| 13 | 13.0 | 0.37 | 0.80 | 1.15 | 2.29 | 2.21 | 3.51 | 0.65 | 0.64 |
| Total | | 46.44 | 100% | 50.17 | 100% | 62.90 | 100% | 101.95 | 100% |

While the sample of Comparative Example 3 has the highest total peak count, being indicative of having the highest intensity, the considerable differences between the individual peak counts of Examples 1 and 2 as compared to that of Example 3 demonstrate a difference in aromatic quality between these samples. Because coffee aroma is a complex mixture of several hundred constituents, many of which are still unidentified, the relative importance and contribution to a desirable aromatic quality of any one peak is still not fully known. However, by means of the sensory tests conducted upon these samples, it is seen that while it is not possible to attribute desirable aromatic preference for one or more specific peaks, it is demonstrated that the samples prepared in accordance with the present invention possess an organoleptic profile which overall is more balanced and more coffee-like than the sample of Example 3.

To evaluate the quality, intensity and overall organoleptic preferability of the samples prepared according to Examples 1 to 3, daily sniff tests are carried out over a one week period. Each day, 16 evaluations are carried out for a total of 80 evaluations. The samples are contained in jars and the same jars are used during the entire test period in order to simulate the relatively harsh and practical in-home situation. A panel of 22 professional coffee experts participated in the sniff tests. The samples are rated for:

1) Order of preference (on a scale of 1 to 3; 1 being the most preferred, based on overall organoleptic preference); and

2) Hedonic ratings (on a scale of 1 to 10; 10 representing fresh roast coffee quality).

The results of the preference and hedonic ratings are set forth in Tables II and III, respectively.

TABLE II

Sensory results: preference ratings

| No. of evaluations | Example 1 | Example 2 | Example 3 |
|---|---|---|---|
| 8 | 2.00 | 1.75 | 2.25 |
| 16 | 1.88 | 2.01 | 2.14 |
| 24 | 1.88 | 1.88 | 2.25 |
| 32 | 1.95 | 1.77 | 2.30 |
| 40 | 1.96 | 1.72 | 2.35 |
| 48 | 1.97 | 1.87 | 2.19 |
| 56 | 1.98 | 1.77 | 2.25 |
| 64 | 1.99 | 1.80 | 2.23 |
| 72 | 2.01 | 1.72 | 2.25 |
| 80 | 2.02 | 1.72 | 2.25 |

TABLE III
Sensory results: hedonic ratings

| No. of evaluations | Example 1 | Example 2 | Example 3 |
|---|---|---|---|
| 8 | 6.25 | 6.25 | 5.65 |
| 16 | 5.95 | 5.75 | 5.50 |
| 24 | 5.85 | 5.85 | 5.35 |
| 32 | 5.75 | 5.90 | 5.30 |
| 40 | 5.60 | 5.90 | 5.10 |
| 48 | 5.55 | 5.70 | 5.15 |
| 56 | 5.55 | 5.75 | 5.10 |
| 64 | 5.50 | 5.70 | 5.05 |
| 72 | 5.40 | 5.75 | 5.00 |
| 80 | 5.45 | 5.75 | 4.95 |

All three samples were generally described as coffee-like and somewhat overpowering when fresh. Upon further testing, a clear preference emerged for the sample produced in Example 2. After 80 open-jar evaluations, this sample achieved an overall score of 1.71 for preference rating, and 5.75 for hedonic rating. The sample of Example 1 received the second highest ratings with a preference and hedonic rating of 2.02 and 5.45, respectively. The sample of Example 3 received preference a hedonic ratings of 2.28 and 4.96, respectively.

The above results clearly demonstrate the selective adsorption phenomenon that takes place in the process of the present invention. While the employment of cryogenic temperatures for the instant coffee powder may produce a stronger and more intense initial in-jar aroma taken that obtained by the process of the present invention, it is only when the temperature of both the instant coffee and the roast and ground coffee are within the prescribed ranges of the present invention that a product is obtained which has a more balanced and less harsh in-jar aroma than that obtained by the cryogenic process.

Example 4

40 kg of a medium roast coffee are used to aromatize 20 kg of instant coffee powder using the apparatus described in Example 1. The roast coffee has a degree of roast of 3.6 G, and an average particle size of 1.5 mm. The powder has been obtained by freeze drying to a final moisture of 3.0% by weight and is plated with 0.5% coffee oil on a solids basis. The powder is loaded into the drum at an initial temperature of 6°C. At the end of the 60 minute trial period, the roast and ground coffee temperature is 93°C, and the instant powder has cooled to 0°C.

The aromatized instant powder produced in this manner has a natural and balanced coffee-like aroma. This powder is air-packed and sealed in 280 gm jars and stored at room temperature for a period of 10 months.

Example 5

The procedure of Example 4 is repeated except that the aromatized powder is filled into the jars under carbon dioxide protection. These jars are also stored at room temperature for a period of 10 months.

The stored samples of Example 4 and 5 are evaluated over a 10 month period for quality and general overall organoleptic preference. A panel of sixteen professional coffee tasters are used in these storage tests.

When freshly packed, the product of Example 4 is overwhelmingly preferred over the product of Example 5, the average hedonic ratings being 6.3 and 5.8, respectively. This preference for the air-packed product is consistently observed over the duration of the storage trial. At the end of the 10-month period, the average hedonic ratings are 5.4 and 5.3, respectively.

Example 6

136 kg/h of freshly ground roasted coffee are continuously passed through a pair of butterfly valves and into a 0.3 m diameter by 3.3 m long jacketed screw in which the roast coffee is heated, conveyed at 2 rpm, and discharged through a second pair of butterfly valves. The feed and discharge valves are controlled to maintain a positive seal. Vacuum steam is supplied to the screw jacket to indirectly heat the

8

roast and ground coffee to a temperature of 62°C. The temperature of the exiting coffee is sensed at the discharge port and is controlled by the regulation of the flow of steam into the jacket.

The coffee has a degree of roast of 3.2 G and an average particle size of 1.9 mm.

The volatile aromatics generated by heating the roast and ground coffee are passed through a gas permeable membrane with an average pore size of about 53 µm and a compressor before passing through a storage bin containing 27 kg of spray dried instant coffee powder. The process is carried out at a small positive pressure (about 0.06 kg/cm$^2$) to overcome the pressure drop in the system.

The instant coffee powder, having a moisture content of 3.5% by weight, is plated with 0.5% by weight of coffee oil; it is maintained at about 25°C (ambient temperature).

The volatile aromatics pass through the instant coffee powder bin at a gas flow rate of 5.1 m$^3$/h, and contact the instant coffee contained in the bin for a period of about 24 minutes. Those volatile aromatics which are not adsorbed by the instant coffee after one pass through the storage bin are recycled back to the conveyor screw.

The packed aromatized instant coffee powder has a pleasant and coffe-like in-jar aroma.

Example 7
(Comparison Example)

The procedure of Example 6 is repeated except that carbon dioxide is used as carrier gas for the aromatics.

2.0 m$^3$/h of carbon dioxide are introduced into the screw conveyor and the gas with volatiles then passed through the bin containing the instant coffee powder and recycled with volatile aromatics not adsorbed by the instant coffee powder.

As compared to the aromatized instant coffee prepared in Example 6, the product prepared in this Example has a weaker and less balanced in-jar aroma. The average hedonic rating for the sample produced in the present Example is 4.8 as compared to a hedonic rating of 6.2 for the sample of Example 6.

**Claims**

1. A process for aromatizing instant coffee powder by transferring volatile aromatics from roast and ground coffee to the instant coffee, characterised in that it comprises
(a) heating the roast and ground coffee to a temperature of 30° to 95°C to release volatile aromatics therefrom; and
(b) allowing the released volatile aromatics to come into contact with the instant coffee which is maintained at a temperature of from 0° to 35°C, whereby volatile aromatics are transferred from the roast and ground coffee and are adsorbed by the instant coffee, the roast and ground coffee being out of contact with the instant coffee.

2. The process of claim 1, wherein the roast and ground coffee is agitated during heating.

3. A process according to claim 1 or claim 2 in which the roast and ground coffee has an average particle size of 0.1 to 2.5 mm.

4. A process according to any one of the preceding claims in which the roast and ground coffee has a degree of roast of 2 to 5 G.

5. A process according to any one of the preceding claims in which the temperature of the roast and ground coffee is 50° to 80°C.

6. A process according to any one of the preceding claims in which the instant coffee is maintained at a temperature of from 10° to 20°C.

7. A process according to any one of the preceding claims in which the instant coffee is agitated during contact with the volatile aromatics.

8. A process according to any one of the preceding claims in which prior to contacting with the volatile aromatics the instant coffee is plated with an edible oil.

9. A process according to any preceding claim in which the amounts of roast and ground coffee to instant coffee are in the ratio of from 0.1:1.0 to 2.0:1.0.

**Patentansprüche**

1. Verfahren zum Aromatisieren von Instant-Kaffeepulver durch Überführen flüchtiger Aromabestandteile von geröstetem und gemahlenem Kaffee auf den Instant-Kaffee, dadurch gekennzeichnet, daß es
(a) ein Erwärmen des gerösteten und gemahlenen Kaffees auf eine Temperatur von 30° bis 95°C zur Freisetzung flüchtiger Aromabestandteile hieraus; und
(b) ein Inkontaktkommen der freigesetzten flüchtigen Aromabestandteile mit dem Instant-Kaffee umfaßt, welcher auf einer Temperatur von 0° bis 35°C gehalten wird, wodurch flüchtige Aromabestandteile von dem gerösteten und gemahlenen Kaffee übertragen und von dem Instant-Kaffee adsorbiert werden, wobei der geröstete und gemahlene Kaffee mit dem Instant-Kaffee nicht in Berührung steht.

2. Verfahren nach Anspruch 1, dadurch gekennzeichnet, daß der geröstete und gemahlene Kaffee während des Erwärmens in Bewegung gehalten wird.

9

3. Verfahren nach Anspruch 1 oder 2, dadurch gekennzeichnet, daß der geröstete und gemahlene Kaffee eine mittlere Teilchengröße von 0,1 bis 2,5 mm aufweist.

4. Verfahren nach einem der vorstehenden Ansprüche, dadurch gekennzeichnet, daß der geröstete und gemahlene Kaffee einen Röstgrad von 2 bis 5 G aufweist.

5. Verfahren nach einem der vorstehenden Ansprüche, dadurch gekennzeichnet, daß die Temperatur des gerösteten und gemahlenen Kaffees auf 50° bis 80°C gehalten wird.

6. Verfahren nach einem der vorstehenden Ansprüche, dadurch gekennzeichnet, daß der Instant-Kaffee auf einer Temperatur von 10 bis 20°C gehalten wird.

7. Verfahren nach einem der vorstehenden Ansprüche, dadurch gekennzeichnet, daß der Instant-Kaffee während des Kontaktes mit den flüchtigen Aromabestandteilen in Bewegung gehalten wird.

8. Verfahren nach einem der vorstehenden Ansprüche, dadurch gekennzeichnet, daß der Instant-Kaffee vor dem Kontakt mit den flüchtigen Aromabestandteilen mit einem eßbaren Öl bedeckt wird.

9. Verfahren nach einem der vorstehenden Ansprüche, dadurch gekennzeichnet, daß die Mengen von geröstetem und gemahlenem Kaffee zu Instant-Kaffee in dem Verhältnis von 0,1:1,0 bis 2,0:1,0 stehen.

**Revendications**

1. Procédé d'aromatisation d'une poudre de café soluble comprenant le transfert de substances aromatiques volatiles de café torréfié au café soluble, caractérisé par le fait qu'il comporte les étapes suivantes:

(a) le café torréfié et moulu chauffé à une température de 30° à 95°C afin de libérer les substances aromatiques volatiles; et

(b) les substances aromatiques volatiles sont mises en contact avec le café soluble maintenu à une température de 0° à 35°C afin d'assurer leur transfert et leur absorption par le café soluble, le café torréfié n'étant pas en contact avec le café soluble.

2. Procédé selon la revendication 1, caractérisé par le fait que le café torréfié est remué pendant qu'il est chauffé.

3. Procédé selon la revendication 1 ou 2, caractérisé par le fait que les particules du café torréfié et moulu ont une grandeur moyenne de 0,1 à 2,5 mm.

4. Procédé selon l'une quelconque des revendications précédentes, caractérisé par le fait que le degré de torréfaction du café moulu mis en oeuvre est de 2 à 5 G.

5. Procédé selon l'une quelconque des revendications précédentes, caractérisé par le fait que le café torréfié et moulu est maintenu à une température de 50° à 80°C.

6. Procédé selon l'une quelconque des revendications précédantes, caractérisé par le fait que le café soluble est maintenu à une température de 10° à 20°C.

7. Procédé selon l'une quelconque des revendications précédentes, caractérisé par le fait que le café soluble est remué pendant qu'il est mis en contact avec les substances aromatiques volatiles.

8. Procédé selon l'une quelconque des revendications précédentes, caractérisé par le fait qu'avant le contact avec les substances aromatiques volatiles, le café soluble est enrobé d'une huile comestible.

9. Procédé selon l'une quelconque des revendications précédentes, caractérisé par le fait que le rapport entre le café torréfié et moulu et le café soluble mis en oeuvre est de 0,1:1,0 à 2,0:1,0.